Europäisches Patentamt

European Patent Office

Office européen des brevets

(19)

(11) **EP 1 460 768 A2**

(12) **EUROPEAN PATENT APPLICATION**

(43) Date of publication:
**22.09.2004 Bulletin 2004/39**

(51) Int Cl.7: **H04B 1/08**

(21) Application number: **04003478.7**

(22) Date of filing: **17.02.2004**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **19.02.2003 JP 2003041288**
**28.08.2003 JP 2003303956**

(71) Applicant: **SEIKO EPSON CORPORATION**
**Shinjuku-ku, Tokyo 163-0811 (JP)**

(72) Inventor: **Oka, Manabu**
**c/o Seiko Epson Corporation**
**Suwa-shi Nagano-ken 392-8502 (JP)**

(74) Representative: **Hoffmann, Eckart, Dipl.-Ing.**
**Patentanwalt,**
**Bahnhofstrasse 103**
**82166 Gräfelfing (DE)**

(54) **Receiver and method of manufacturing the receiver**

(57) A device manufacturer (70a, 70b, 70n) determines characteristic data, such as an approximate expression representative of the temperature characteristic of piezoelectric device (28) and coefficients of the approximate expression, and stores it in a memory corresponding to a serial number of each piezoelectric device (28). The device manufacturer (70), in the case of shipping a piezoelectric device (28) to a vendor (90), transfers the characteristic data of the piezoelectric device to the vendor server (92) through a communication network (76). A client (94a), when the purchased piezoelectric device is mounted on an electronic appliance, reads serial number from the device (28) and inputs it to the client computer (96a). The client computer (96a) acquires the characteristic data of the piezoelectric device corresponding to the serial number from the vendor server (92) or the like through the communication network (76), and writes it to a memory of the receiver.

FIG. 4

EP 1 460 768 A2

**Description**

The present invention relates to a method of manufacturing a receiver, and more particularly to a method of manufacturing a GPS receiver or a cellular telephone having a GPS receiving function. The invention also relates to a receiver manufactured by using the method.

Recently, cellular telephones having GPS (Global Positioning System) receiving functions have become more popular along with the development of electronic technology. In the GPS, positioning signals are received from arbitrary three or more satellites at locations allowing signal reception of among nearly 24 artificial satellites (GPS satellites) orbiting the earth every nearly 12 hours. Based upon the positioning signals, the distance to each satellite is determined to thereby determine the signal-receiving position from those distances.

The GPS satellites orbit the earth in a period of about 12 hours as noted above, i.e., they move with a high velocity. Consequently, the positioning signal received at the terrestrial point from a GPS satellite fluctuates in frequency due to the Doppler effect. The amount of frequency fluctuation depends upon the relative velocity of the receiving end and the GPS satellite. The fluctuation in the positioning signal from a GPS satellite by the Doppler effect can be calculated on the basis of the satellite orbit information previously stored by the GPS receiver and the location of the reception end. At the reception end, positioning is easy by making a correction to the fluctuation on the basis of a reference oscillator frequency. Conventionally, as such a GPS reference oscillator a temperature compensated piezoelectric oscillator (Temperature Compensated Crystal Oscillator: TCXO) having a comparatively low fluctuation of oscillation frequency against ambient temperature change is employed.

To receive a GPS signal, there is a need to search in a certain frequency range for a satellite signal until a satellite signal is received. Accordingly, in order to reduce the time from powering on the GPS receiver up to capturing a satellite signal that allows positioning, the reference oscillator is desirably high in frequency accuracy, ideally $\pm 0.1$ ppm or less is required. However, usual TCXOs have an oscillation frequency accuracy of about $\pm 1.0$ ppm to $\pm 2.5$ ppm within the operating temperature range. In the case of using such a TCXO, the frequency search range for capturing positioning signals is broadened, requiring an increased time for capturing a positioning signal. Moreover, the piezoelectric oscillator, such as a TCXO, usually suffers from aging in oscillation frequency, thus raising a problem of errors.

To overcome these problems, instead of using a TCXO, JP-A-2001-281322 discloses using a usual piezoelectric oscillator (Simple Packaged Crystal Oscillator: SPXO) comprising an AT-cut quartz resonator (hereinafter, also referred to as "AT resonator") as a reference oscillator, wherein the accuracy of the reference oscillation frequency is substantially $\pm 0.1$ ppm or less. In this prior art, the curve representing the frequency-temperature characteristic of the piezoelectric resonator is approximated by a quartic function of temperature; the ambient temperature of the oscillator is detected, and a frequency correction amount with temperature is determined depending upon the detected temperature and an approximate expression that represents the above mentioned function.

Generally, the SPXO using an AT resonator has a change rate of oscillation frequency within the usual operating temperature range of nearly 4 times that of the TCXO or even more. Consequently, in the case of employing an SPXO as a reference oscillator for a GPS receiver, it is necessary to measure the frequency-temperature characteristic of the resonator and to determine an approximate expression as noted above. Conventionally, for the frequency-temperature characteristic, the GPS receiver maker, after purchasing a piezoelectric oscillator, measures frequency-temperature characteristics of the individual piezoelectric oscillators to thereby determine the approximate expression. Consequently, much labor and time is required for manufacturing a GPS receiver.

Recently, there are widespread piezoelectric oscillators incorporating a piezoelectric resonator and an IC, such as an oscillator circuit, within one package. It is conceivable that the characteristic data concerning a piezoelectric oscillator including the foregoing approximate expression and the coefficients of the approximate expression are stored in an IC memory incorporated within the package and provided to the receiver maker. However, adding a memory to the oscillator IC, increases the size of the IC proportional to the added circuits for data input/output and to the number of bits for storage, thus making it difficult to provide a piezoelectric oscillator satisfying the requirement of the client, such as a cost and size-reduction requirement. Also, once the information concerning the frequency-temperature characteristic specific to a piezoelectric oscillator has been moved form the memory within the oscillator IC to a GPS receiver memory, it is no longer necessary to use the memory of the oscillator IC, thus raising a drawback of much uselessness.

It is an object of present invention to eliminate the foregoing disadvantage of the prior art and to facilitate the manufacture of an accurate receiver. It is another object to provide a piezoelectric oscillator having a high frequency accuracy without suffering from an increase in size or costs.

Piezoelectric oscillators are mounted for outputting reference frequencies, on quite many electronic appliances. Recently, various electronic appliances are in progress of performance improvement and diversification, thus having large memories and high-performance operation processing units in order to realize it. The oscillator makers, when manufacturing a piezoelectric oscillator, measure various characteristic data including the frequency-temperature characteristic of each piezoelectric resonator and piezoelectric oscillator. They have abundant facilities and measurement experiences, having the capability of obtaining accurate characteristic data. Accordingly, in case a receiver maker can store the characteristic data gained by the oscillator maker to a GPS receiver memory, the oscillator maker can provide a small-sized oscillator having an IC having a minimum memory. The receiver maker does not need to measure by himself characteristic data, owing to the provision of measurement data from the oscillator maker. Cost reduction can be achieved for both the oscillator maker and the receiver maker.

The objects of the present invention are achieved by a method as claimed in claims 1 and 2, respectively and a receiver as claimed in claim 5. Preferred embodiments of the invention are subject-matter of the dependent claims.

In the present invention, the characteristic data of a piezoelectric device is supplied through a communication network such as the Internet or other separate data carrier (separate from the piezoelectric device itself). Consequently, the receiver maker is not required to measure, by himself, the characteristic data of a piezoelectric device, but allowed to write the characteristic data obtained from the oscillator maker through the communication network or other data carrier to the storage section of the receiver and to manufacture an accurate receiver easily and swiftly. Because the piezoelectric device does not need a memory for storing the characteristic data, a size reduction is possible thus satisfying the client's desire for size reduction.

Preferred embodiments of a manufacturing method for a receiver and a receiver manufactured by the method according to the present invention will be explained in detail with reference to the attached drawings, in which

Fig. 1      is a block diagram of a receiver according to a first embodiment of the present invention;

Fig. 2      is a block diagram showing one example of an SPXO;

Fig. 3      is a diagram showing one example of an identification marker according to the first embodiment of the invention;

Fig. 4      is a diagram explaining a manufacturing method for a receiver according to the first embodiment;

Fig. 5      is a graph comparing the frequency-temperature characteristic of the SPXO and TCXO;

Fig. 6      is an example of the data stored in a vendor server;

Fig. 7      is a diagram explaining a manufacturing method for a receiver according to a second embodiment.

Fig. 8      illustrates a shipment form of a piezoelectric device according to the second embodiment;

Fig. 9      shows another example of a barcode;

Fig. 10     illustrates a position for providing a barcode; and

Fig. 11     illustrates another position for providing a barcode.

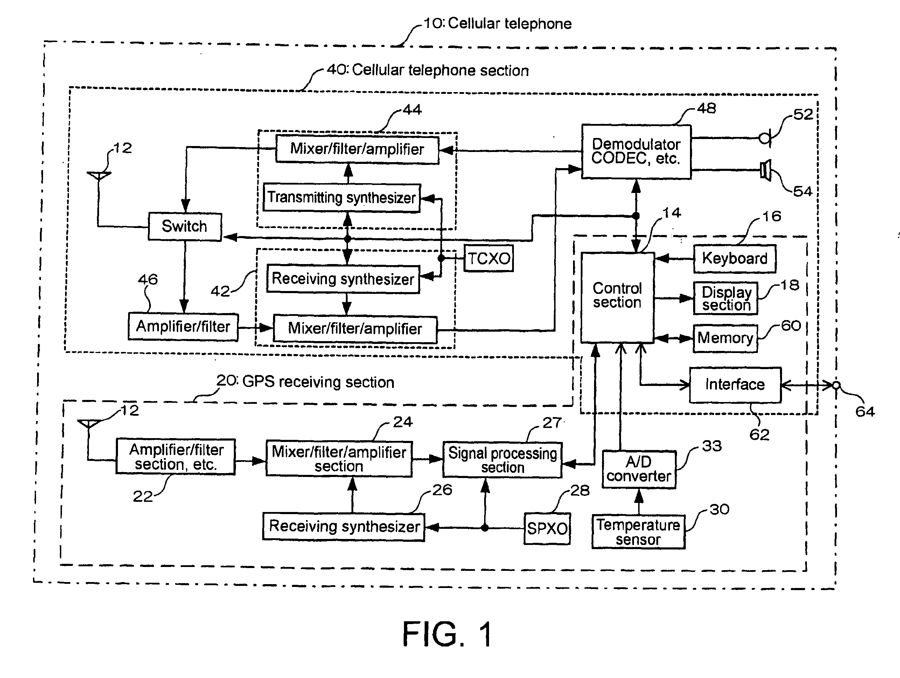

Fig. 1 is a schematic block diagram showing a digital cellular telephone having a GPS receiving function as an example of one embodiment of a receiver according to the present invention. In Fig. 1, a cellular telephone 10 has a GPS receiving section 20 and a telephone section 40. The GPS receiving section 20 has an amplifier/filter section 22, a mixer/filter/amplifier section 24, a receiving synthesizer 26, a signal processing section 27, an SPXO 28 serving as a reference oscillator, a temperature sensor 30, and an A/D converter 33.

The amplifier/filter section 22 and the mixer/filter/amplifier section 24 amplify/select a positioning signal from a GPS satellite received through an antenna 12 and frequency-convert it on the basis of a signal from the reference oscillator SPXO 28. The signal processing section 27 demodulates the GPS signal by using the signal from the mixer/filter/amplifier section 24 and the signal from the SPXO 28, on the basis of the information from the control section 14 configured by a CPU. The result is outputted to the control section 14. The temperature sensor 30, for detecting the ambient temperature of the SPXO 28, is provided close to the SPXO 28, to input a detection signal to the control section 14 through an A/D converter 33. The control section 14, on the basis of the detected temperature of the temperature sensor 30, determines a correction amount for an oscillation frequency of the SPXO 28 and provides it to the signal processing section 27, and further controls the receiving synthesizer 26 to keep the frequency constant despite temperature changes to which the SPXO 28 might be exposed. The control section 14 calculates the current position (positioning signal receiving position) of the cellular telephone 10 on the basis of an output signal of the signal processing section 27.

Incidentally, the temperature sensor 30 is desirably provided on the side of the package or within the package of the SPXO 28. Due to this, the operating temperature of the SPXO 28 can be detected more correctly, making it possible to enhance the correction accuracy for the oscillation frequency of the SPXO 28. Accordingly, it is possible to narrow down the frequency search range for capturing positioning signals, and hence to reduce the search time for a positioning signal.

The telephone section 40 shows a schematic configuration of a digital cellular telephone apparatus. The telephone section 40 is configured by an antenna 12 for receiving an RF signal from a base station (not shown), an amplifier/filter 46 for amplifying the signal from the antenna, a receiving section 42 configured by a mixer/filter/amplifier and a receiving synthesizer, a transmitter section 44 configured by a mixer/filter/amplifier and a transmitting synthesizer, a demodulator/CODEC section 48 for modulating and demodulating a digital signal, a control section 14 for controlling the cellular telephone 10, a microphone 52, a speaker 54, a keyboard section 16, a display section 18, and an interface 62. The interface 62 is connected to a connector 64 provided on the cellular telephone 10 and to the control section 14, thus allowed to exchange data between the cellular telephone 10 and the outside.

The control section 14 is connected with the keyboard section 16 serving as an input section, the display section 18 such as a liquid-crystal panel and a memory 60 and controls the overall operation of the digital cellular telephone having a GPS receiving function. The keyboard section 16, capable of inputting telephone numbers or characters, is adapted to provide various commands to the control section 14. The display section 18 is made for displaying an incoming telephone number, mail or image, and the current position based on the positioning signal received by the GPS receiving section 20. The memory 60 stores with not only a program for operating the GPS receiving section 20 but also various programs for executing each function for the cellular telephone 10. Also, the memory 60 stores user information, such as telephone directory and various histories, and GPS map information, SPXO 28 characteristic data (approximate expression for the curve representing the temperature-frequency characteristic, and coefficients in the approximate expression), a dictionary and so on. The characteristic data of SPXO 28 is written to the memory 60 through the interface 62 and connector 64, in the manufacturing process of the cellular telephone 10, as hereinafter described. Of course, the approximate expression may be written in a form given with coefficients.

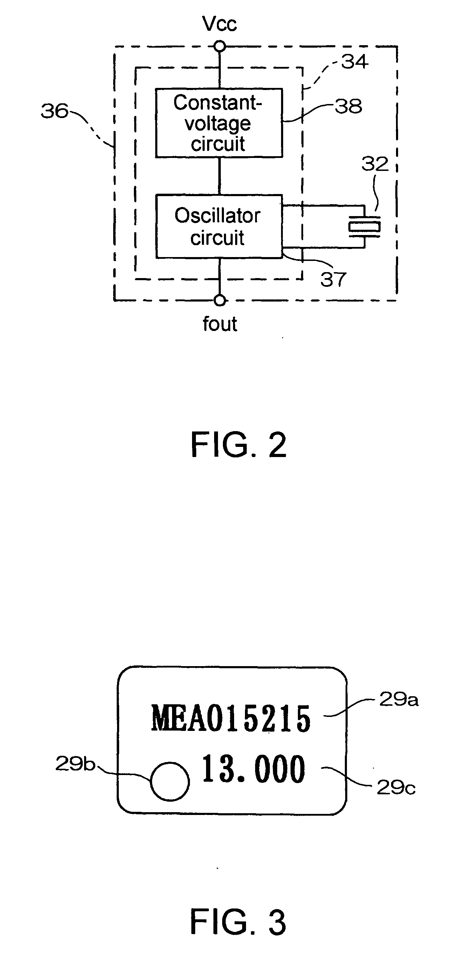

The reference oscillator SPXO 28, in this embodiment, is configured as shown in Fig. 2, i.e. comprises a piezoelectric resonator 32 formed by an AT-cut quartz plate or the like and an IC 34, both being accommodated within one package 36. The IC 34 has an oscillator circuit 37 for oscillating the resonator 32 and a constant-voltage circuit 38. The constant-voltage circuit 38 is connected to a power source through a terminal $V_{cc}$, to supply a constant voltage to the oscillator circuit 37 avoiding oscillation frequency fluctuations due to power voltage fluctuations. The oscillator circuit 37 supplies an oscillation signal of the oscillation frequency to the receiving synthesizer 26 and signal processing section 27 through an output terminal $f_{out}$. Incidentally, of course, the resonator 32 and the IC 34 may be accommodated in separate packages.

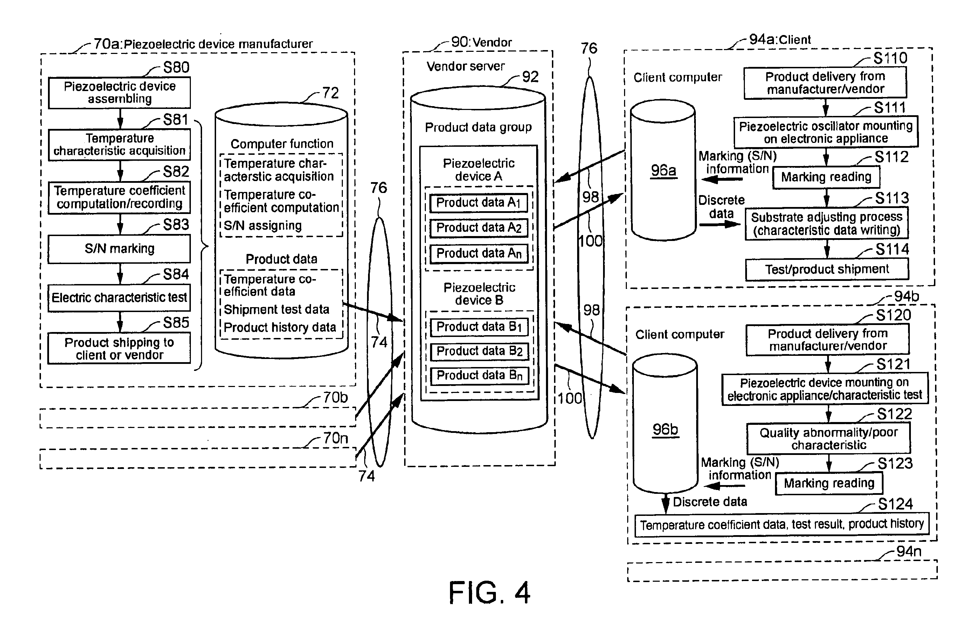

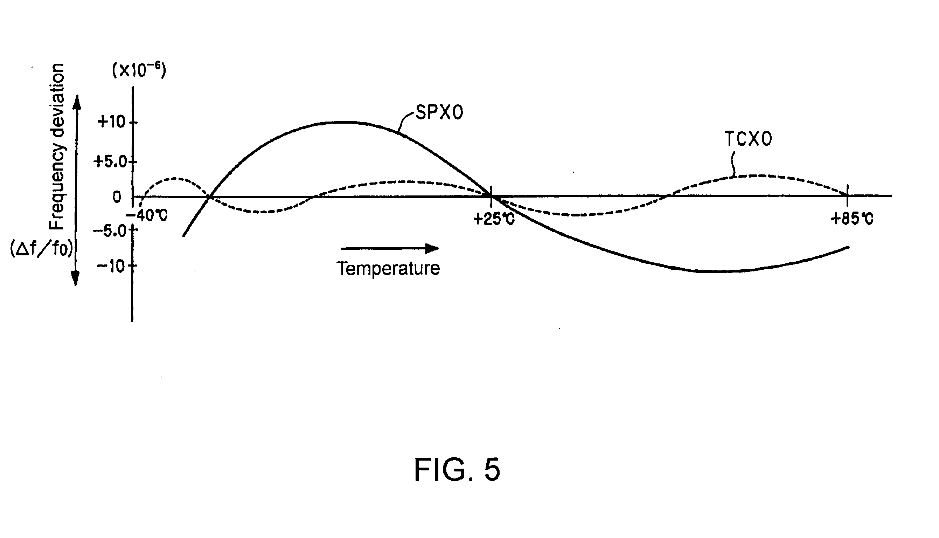

The characteristic data of the SPXO 28 is acquired as shown in Fig. 4 and written to the memory 60 of the cellular telephone 10 through the interface 62 and connector 64. In Fig. 4, the characteristic data of the SPXO 28 is gained at the manufacturer of the SPXO 28 (piezoelectric device manufacturer) 70 (70a to 70n). Namely, each device manufacturer 70, after assembling the piezoelectric device (SPXO 28, in the embodiment) (step S80), measures the piezoelectric device, one at a time, for the relationship between temperature and frequency and acquires a frequency-temperature characteristic (temperature characteristic) (step S81). The measured relationship data between temperature and frequency is inputted to a manufacturer computer 72. The manufacturer computer 72 determines the frequency-temperature characteristic (relationship between temperature and frequency deviation) as shown in Fig. 5.

The SPXO 28 using the AT resonator has a great frequency change its temperature characteristic (shown by the solid line in Fig. 5) is inferior to that (shown by the broken line) of the TCXO (temperature compensated piezoelectric oscillator). Namely, the TCXO can be adjusted in oscillation frequency deviation ($\Delta f/f_0$) to within $\pm 2.5$ ppm ($\pm 2.5 \times 10^{-6}$) or less in a temperature range of -40 °C to +85 °C. Herein, $f_0$ is the oscillation frequency of the piezoelectric device at +25 °C and $\Delta f$ is the difference between the oscillation frequencies f and $f_0$ of the piezoelectric device at an arbitrary temperature, i.e., $\Delta f = f - f_0$.

Contrary to this, the SPXO 28 has a frequency deviation ($\Delta f/f_0$) of approximately 10 ppm that is as great as about four times that of the TCXO in the same temperature range. However, because the temperature characteristic of the SPXO using an AT resonator can be approximated quite well by a quartic expression as a function of temperature, the oscillation frequency deviation at -40 °C to +85 °C can be predicted within approximately $\pm 0.1$ ppm. Accordingly, in this embodiment, the temperature coefficients representative of the frequency-temperature characteristic specific to each piezoelectric device are determined using the method of least squares or the like by the manufacturer computer 72, and stored (recorded) to the storage section of the manufacturer computer 72 (step S82).

Provided that the reference temperature is $T_0$, T is an arbitrary temperature in the temperature range of -40 °C to +85 °C, and the offset amount at the reference temperature $T_0$ is E, then the approximate expression representative of the SPXO temperature characteristic shown in Fig. 5 can be expressed as:

$$(\Delta f/f_0) = A (T - T_0)^4 + B (T - T_0)^3 + C (T - T_0)^2 + D (T - T_0) + E$$

where $f_0$ is the SPXO oscillation frequency at the reference temperature $T_0$ and $\Delta f$ is the frequency deviation determined by $\Delta f = f - f_0$ when the SPXO oscillation frequency is taken f at the arbitrary temperature T; A, B, C, D are the coefficients of the elements of the fourth to first degree (temperature coefficients) of the approximate expression.

A respective serial number (S/N) is assigned to each piezoelectric device, whose temperature characteristics and temperature coefficients have been determined, by the manufacturer computer 72. As shown in step S83 of Fig. 4, the serial number is indicated (marked) on a package surface together with the oscillation frequency, by a not-shown printer. Fig. 3 shows one example of indication made on the piezoelectric device package. The upper indication 29a in Fig. 3 is the serial number (identification code). In this embodiment, the lower mark 29b represents a first-pin position on the SPXO 28 while the lower right numeral 29c represents the oscillation frequency of the SPXO 28.

The serial number which is unique for each piezoelectric device is printed on the SPXO 28 as an identification marker for identifying each piezoelectric device. The foregoing characteristic data including the temperature coefficients is written to the storage section of the manufacturer computer 72 together and in correspondence with the serial number. Thereafter, the piezoelectric device is measured for other electric characteristics (step S84) and which are then stored in the manufacturer computer 72. Incidentally, the manufacturer computer 72 plays a role as a server as hereinafter described, to output characteristic data onto a communication network 76 upon request of a client.

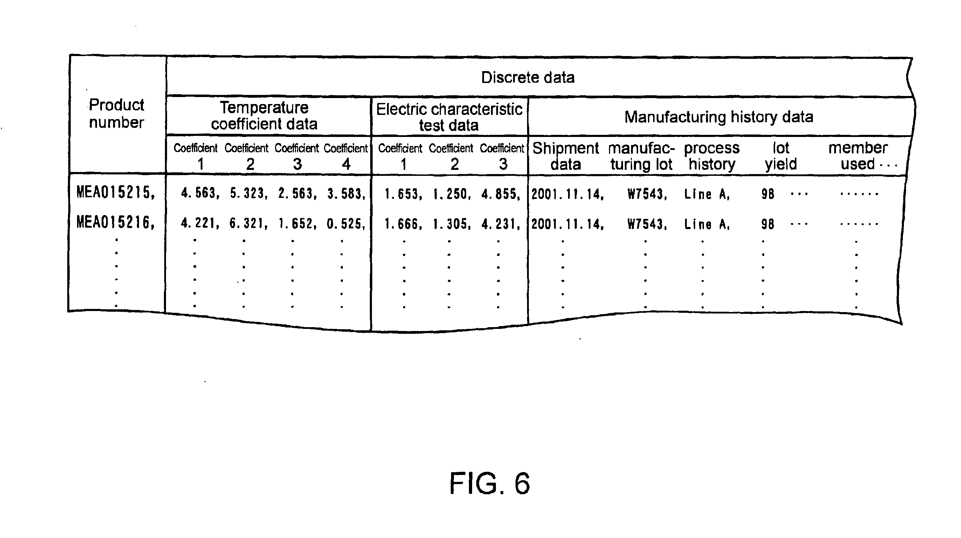

The piezoelectric device (SPXO 28) thus manufactured is shipped to a client 94 (94a to 94n) or a piezoelectric device vendor 90, as shown in step S85. The piezoelectric device manufacturers 70, when shipping a piezoelectric device to the vendor 90, transfer the characteristic data, shipment test data, manufacturing history data, etc. of the shipped piezoelectric device together with the respective serial number, from the manufacturer computer 72 to a vendor server 92 through a communication network 76 such as the Internet as indicated by the arrow 74. These data are stored in the vendor server 92 in correspondence with the serial numbers. In the vendor server 92 are stored characteristic data and the like of various piezoelectric devices A $(A_1$ to $A_n)$, B$(B_1$ to $B_n)$ manufactured by respective piezoelectric device manufacturers 70. Fig. 6 shows one example of the data stored in the vendor server 92.

The client 94 (94a to 94n), a manufacturer of the receiver such as the cellular telephone 10, purchases a piezoelectric device (SPXO 28) directly from the device manufacturer 70 or from the vendor 90, and receives it as shown in step S110, for example. The client 94a mounts the purchased piezoelectric device in the receiver (cellular telephone 10) (step S111). Also, the client 94a, when or after mounting the piezoelectric device in the receiver, reads the serial number from the identification marker on the package of the piezoelectric device by a reader (not shown) having a CCD camera or the like. The reader makes an image processing such as binarization on the image picked-up by the CCD camera, and forwards the read-out serial number of the piezoelectric device to the client computer 96a.

Having received the serial number from the reader, the client computer 96a transfers the serial number to the manufacturer computer 72 or vendor server 92 through the communication network 76 as shown by the arrow 98, and outputs a transfer request for the characteristic data of the piezoelectric device corresponding to the serial number. The manufacturer computer 72 or vendor server 92, having received the data transfer request from the client computer 96a, searches through the memory, reads out the characteristic data corresponding to the serial number, and transfers it to the client computer 96a through the communication network 76, as shown by the arrow 100. The client computer 96a, having received the characteristic data, writes the characteristic data to the storage section of the receiver equipped with the piezoelectric device (step S113). Namely, the client computer 96a writes the characteristic data of the SPXO 28 to the memory 60 of the cellular telephone 10 used as an example of a receiver in this embodiment. The receiver having thus received the characteristic data undergoes the final product test followed by shipment, as shown at step S114. Incidentally, writing the characteristic data at step S113 may be by outputting the characteristic data from the client computer 96a to a not-shown data writer and carried out by the data writer. Furthermore, the characteristic data corresponding to the serial number of the SPXO may be previously transferred to the client computer 96a on a customer-by-customer or lot-by-lot basis.

By using the characteristic data, which the device manufacturer 70, has acquired in the manufacturing process, in this manner, the manufacturing method of this embodiment can manufacture a receiver (cellular telephone 10) smoothly and swiftly. Moreover, because the characteristic data of a piezoelectric device indispensable for accurate operation is directly written to the memory of the receiver, the piezoelectric device can be made small in size. This makes it possible to meet the requirement toward size reduction.

Incidentally, the cellular telephone 10 of the embodiment operates as follows. When the GPS function is selected by the keyboard section 16, the control section 14 of the cellular telephone 10, reads the program for operating the GPS receiving section 20 out of the memory 60 and starts up the GPS receiving section 20. Then, the control section 14 computes a frequency deviation by the use of the approximate expression, on the basis of the temperature information from the temperature sensor and the temperature characteristic data stored in the memory 60 (temperature coefficient data). Based on the frequency deviation information, the receiving synthesizer 26 is controlled to make an input to the mixer/filter/amplifier section 24.

The signal processing section 27 carries out a process of capturing a positioning signal from a satellite, by the utilization of the frequency deviation information from the control section 14, the reference signal from the SPXO 28 and the intermediate frequency signal outputted from the mixer/filter/amplifier section 24. After having captured the signals from plural satellites, the control section 14 determines the current position of the cellular telephone 10 on the basis of the information of a distance (pseudo distance) between the GPS satellites and the cellular telephone 10. Thus, a positioning result is outputted on the display section 18, or the memory 60 is searched and the corresponding map information is read out and displayed on the display section 18.

The telephone section 40 of the cellular telephone 10 operates as follows. The RF signal from a base station (not shown) is passed through the antenna 12 and amplifier/filter 46 and frequency-converted at the receiving section 42, and thereafter converted into a audio signal in the demodulator/CODEC section 48 and then outputted from the speaker 54. The caller's voice converted into an electric signal by the microphone 52 is digital-modulated by the demodulator/CODEC section 48 and converted into an RF frequency by the transmitter section 44, then being sent to the base station through the antenna 12. The control programs and user information, such as telephone directory and history information, for use in the operation are stored in the memory 60.

Incidentally, the system for acquiring piezoelectric-device characteristic data through the communication network 76 shown in Fig. 4 allows for such a utilization method as that exemplified by the client 94b. Namely, the client 94b, after purchasing a piezoelectric device from the device manufacturer 70 or vendor 90 (step S120), mounts it on an electronic appliance. Assume that a trouble such as quality abnormality assumably occurs (step S122) when a characteristic test of the performance of the electronic appliance (step S121) is conducted. In such a case, the client 94b reads out, by the reader, the serial number indicated on the package of the piezoelectric device similarly to the foregoing (step S123) and inputs it to the customer computer 96b. The client computer 96b outputs a transfer request for the received serial number and characteristic data to the manufacturer computer 72 or vendor server 92 through the communication network 76 as shown by the arrow 98. And, the client 94b receives characteristic data and the like through the communication network 76 as indicated by the arrow 100 (step S124), and utilizes these data for analyzing a trouble cause of the electronic appliance encountered quality abnormality or poor characteristic.

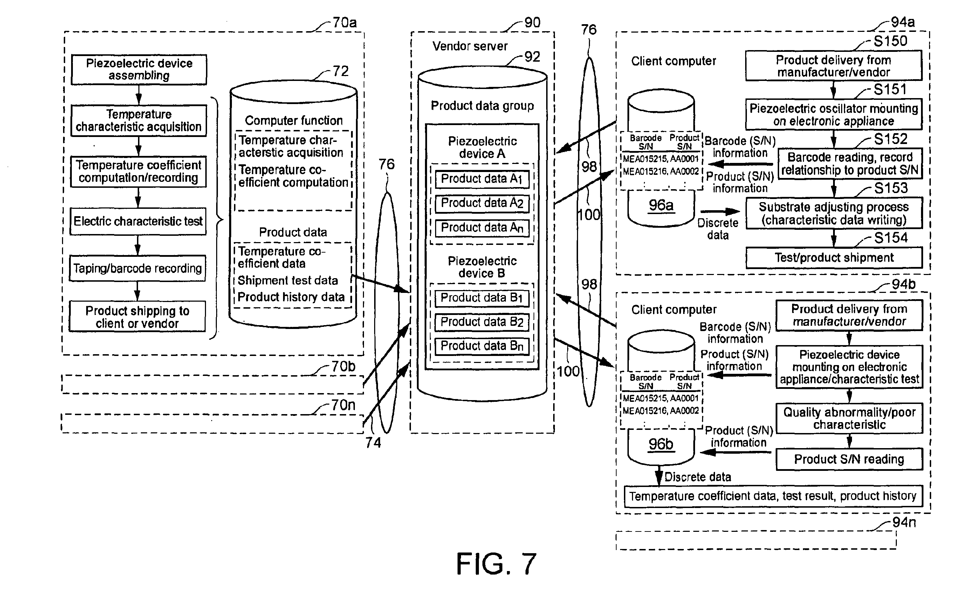

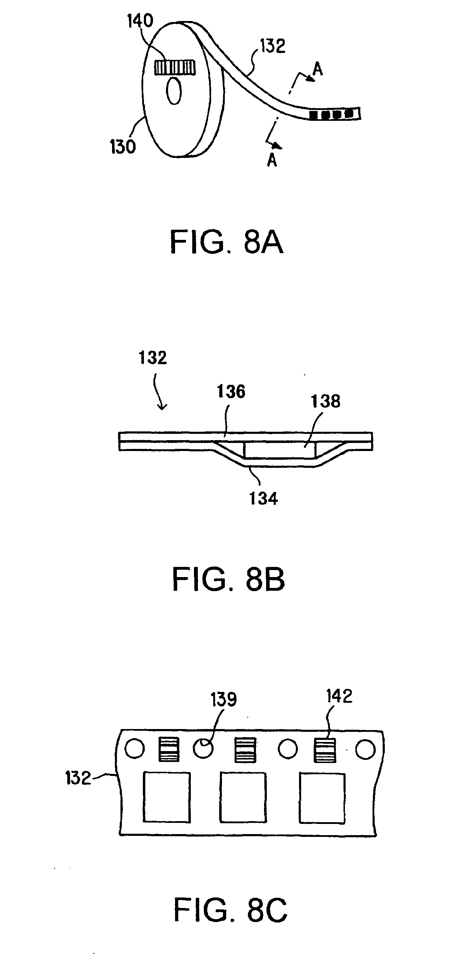

Fig. 7 illustrates a modification of the manufacturing method to be applied where the piezoelectric device has an identification marker made as a barcode. Note that blocks 70a-70n and 90 and the communication network 76 in Fig. 7 are the same as in Fig. 4. The device manufacturer 70 usually ships piezoelectric devices in a state held by a wrapping tape 132 and wound on a reel 130, as shown in Fig. 8A. Namely, the wrapping tape 132 is formed by a thin base tape 134 of plastic and a top tape 136, as shown in Fig. 8B, which is a sectional view taken along line A-A in Fig. 8A. The piezoelectric device 138 is sandwiched between the base tape 134 and the top tape 136. The wrapping tape 132 is formed with sprocket holes 139 along one side thereof, as shown in Fig. 8C, which is an enlarged partial view. The wrapping tape 132, in a destination of purchase, is loaded on a mounting machine called a mounter. The mounter withdraws the wrapping tape 132 from the reel 130, and takes out the piezoelectric devices 138 while stripping the top tape 136 off the base tape 134 and mounts them onto electronic appliances.

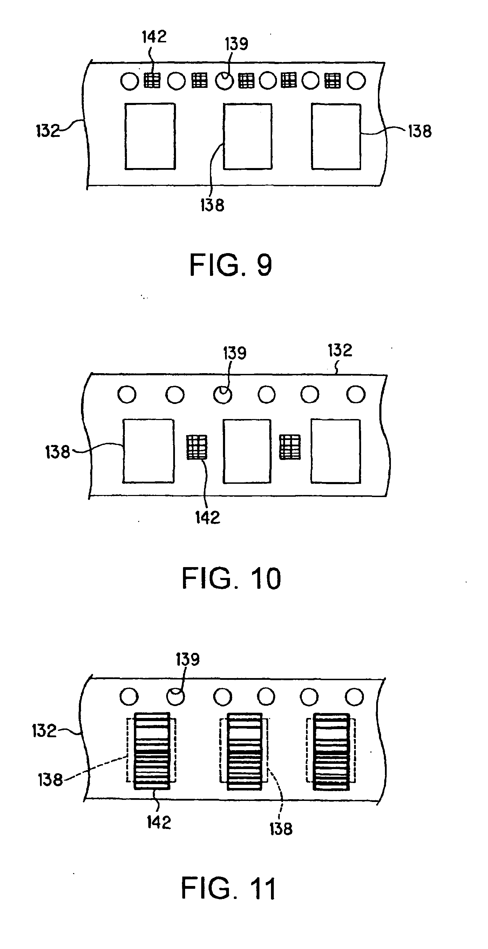

For this reason, the device manufacturer 70, when shipping the piezoelectric device 138 by wrapping, makes an indication of manufacture lot, etc. onto the reel 130 by means of a barcode 140 as shown in Fig. 8A, and further makes an indication of the serial number (S/N) of each piezoelectric device 138 onto the wrapping tape 132 by means of a barcode 142 as shown in Fig. 8C. The barcode 142 may be a one-dimensional barcode as shown in Fig. 8 or a two-dimensional barcode as shown in Fig. 9. The barcode 142 may be provided in a position between adjacent sprocket holes 139, between adjacent piezoelectric devices 138 or on each piezoelectric device 138 as shown in Figs. 9, 10 and 11.

The device manufacturer 70, when shipping the piezoelectric devices 138 with a barcode 142 on a wrapping tape 132 to the vendor 90, transfers the characteristic data, manufacturing history data, etc. of each piezoelectric device 138 corresponding to serial numbers thereof to the vendor server 92 in the same way as in the case of Fig. 4. The client 94a mounts a delivered piezoelectric device 138 on a receiver or other electronic appliance (steps S150, S151). Then, the barcode 142 put on the wrapping tape 132 is read out by a not-shown barcode reader (step S152). The read-out serial number is inputted to the client computer 96a. The client computer 96a receives the characteristic data corresponding to the serial number through the communication network 76 similarly to the foregoing, and writes it to the memory of the electronic appliance (step S153). Thereafter, the client 94a, after examining the electronic appliance, ships the product (step S154). This can provide an effect similar to the foregoing.

Incidentally like the case of the client 94b of Fig. 7, also in this case, in the event a trouble occurs with the electronic appliance having a piezoelectric device 138 built, the serial number is read from the barcode 142. The characteristic data and the data of manufacturing history, etc. corresponding to the serial number are acquired through the communication network 76, which can be utilized in trouble cause analysis on the electronic appliance.

The client 94 may acquire characteristic data of a piezoelectric device 138 through a recording medium and write it to the memory of an electronic appliance such as a receiver. Namely, the device manufacturer 70 writes the serial number identifying each piezoelectric device 138 as a barcode 142 onto a wrapping tape 132. Also, the device manufacturer 70 records the characteristic data and the manufacturing history data, etc. of each piezoelectric device 138 on a recording medium (not shown) to be read by a computer, such as a flexible disc, a CD-ROM, a DVD-ROM or a memory card using a non-volatile memory, to sell the recording medium attached to the piezoelectric device 138. The client 94, when mounting the piezoelectric device 138 on an electronic appliance, reads the serial number of the piezoelectric device 138 from the barcode 142 put on the wrapping tape 132, to read the characteristic data of the piezoelectric device 138 corresponding to the serial number from the recording medium and write it to the memory of the electronic appliance equipped with the piezoelectric device 138. In this case, it is possible to obtain an effect similar to the foregoing.

Incidentally, although the embodiment explained the case that the receiver is a digital cellular telephone 10, the receiver may be a GPS receiver or another communication apparatus. Although the embodiment explained the case that the piezoelectric device is the SPXO 28 made by an AT resonator, the piezoelectric device may be a tuning fork type resonator or SAW (Surface Acoustic Wave).

**Claims**

1. A method of manufacturing a receiver incorporating a piezoelectric device, the method comprising the steps:

    a) storing, in a server, characteristic data of a plurality of piezoelectric devices (28) in correspondence with respective identification codes (29a) represented by identification markers (29a-29c; 142) put on each piezoelectric device (28); and
    b) reading the identification marker when the piezoelectric device (28) is assembled in the receiver, and receiving from the server through a communication network (76) the characteristic data corresponding to the identification code (29a) read from the identification marker and writing the characteristic data into a storage section of the receiver.

2. A method of manufacturing a receiver incorporating a piezoelectric device (28), the method comprising:

    a) acquiring, together with the piezoelectric devices (28), a recording medium having recorded thereon characteristic data of a plurality of piezoelectric devices (28) in correspondence with respective identification codes (29a) represented by identification markers (29a-29c; 142) put on each piezoelectric device (28); and
    b) reading the identification marker when the piezoelectric device (28) is assembled in the receiver, and reading from the recording medium the characteristic data corresponding to the identification code (29a) read from the identification marker and writing the characteristic data into a storage section of the receiver.

3. The method according to claim 1 or 2, wherein the characteristic data is acquired during manufacturing of the piezoelectric device (28).

4. The method according to claim 1, wherein the server is set up at a vendor (90) for the piezoelectric device (28), the characteristic data being acquired during manufacturing of the piezoelectric device (28) and sent together with the respective identification codes (29a) to the server through the communication network (76).

5. A receiver obtainable by a method according to any of claims 1 to 4.

FIG. 1

10: Cellular telephone
40: Cellular telephone section
20: GPS receiving section

Cellular telephone section components:
- Demodulator CODEC, etc. (48)
- Mixer/filter/amplifier (44)
- Transmitting synthesizer
- Receiving synthesizer (42)
- Mixer/filter/amplifier
- Switch
- Amplifier/filter (46)
- TCXO
- 52, 54
- 12

Control section (14)
- Keyboard (16)
- Display section (18)
- Memory (60)
- Interface (62)
- 64

GPS receiving section:
- Amplifier/filter section, etc. (22)
- Mixer/filter/amplifier section (24)
- Receiving synthesizer (26)
- Signal processing section (27)
- SPXO (28)
- 12

A/D converter (33)
Temperature sensor (30)

Vcc

34

Constant-
voltage
circuit

38

36

32

Oscillator
circuit

37

fout

# FIG. 2

MEA015215

29a

29b

13. 000

29c

# FIG. 3

70a: Piezoelectric device manufacturer

S80 Piezoelectric device assembling

S81 Temperature characteristic acquisition

S82 Temperature coefficient computation/recording

S83 S/N marking

S84 Electric characteristic test

S85 Product shipping to client or vendor

72

Computer function
Temperature characteristic acquisition
Temperature co-efficient computation
S/N assigning

Product data
Temperature co-efficient data
Shipment test data
Product history data

70b

70n

76

74

74

98

100

100

90: Vendor

Vendor server 92

Product data group

Piezoelectric device A
Product data A1
Product data A2
Product data An

Piezoelectric device B
Product data B1
Product data B2
Product data Bn

76

98

94a: Client

Client computer

96a

S110 Product delivery from manufacturer/vendor

S111 Piezoelectric oscillator mounting on electronic appliance

Marking (S/N) information

S112 Marking reading

Discrete data

S113 Substrate adjusting process (characteristic data writing)

S114 Test/product shipment

94b

Client computer

96b

S120 Product delivery from manufacturer/vendor

S121 Piezoelectric device mounting on electronic appliance/characteristic test

S122 Quality abnormality/poor characteristic

Marking (S/N) information

S123 Marking reading

Discrete data

S124 Temperature coefficient data, test result, product history

94n

FIG. 4

EP 1 460 768 A2

10

FIG. 5

| Product number | Discrete data | | | | | | | | | | |
| --- | --- | --- | --- | --- | --- | --- | --- | --- | --- | --- | --- | --- |
| | Temperature coefficient data | | | | Electric characteristic test data | | | Manufacturing history data | | | | |
| | Coefficient 1 | Coefficient 2 | Coefficient 3 | Coefficient 4 | Coefficient 1 | Coefficient 2 | Coefficient 3 | Shipment data | manufac- turing lot | process history | lot yield | member used ··· |
| MEA015215, | 4.563, | 5.323, | 2.563, | 3.583, | 1.653, | 1.250, | 4.855, | 2001.11.14, | W7543, | Line A, | 98 ··· | ······ |
| MEA015216, | 4.221, | 6.321, | 1.652, | 0.525, | 1.666, | 1.305, | 4.231, | 2001.11.14, | W7543, | Line A, | 98 ··· | ······ |

FIG. 6

**FIG. 7**

Client computer — 94a

- S150: Product delivery from manufacturer/vendor
- S151: Piezoelectric oscillator mounting on electronic appliance
- S152: Barcode reading, record relationship to product S/N
- S153: Substrate adjusting process (characteristic data writing)
- S154: Test/product shipment

Barcode (S/N) information
Product (S/N) information

| Barcode S/N | Product S/N |
|---|---|
| MEA015215, AA0001 | |
| MEA015216, AA0002 | |

96a — Discrete data

Client computer — 94b

- Product delivery from manufacturer/vendor
- Piezoelectric device mounting on electronic appliance/characteristic test
- Quality abnormality/poor characteristic
- Product S/N reading

Barcode (S/N) information
Product (S/N) information
Product (S/N) information

| Barcode S/N | Product S/N |
|---|---|
| MEA015215, AA0001 | |
| MEA015216, AA0002 | |

96b — Discrete data

Temperature coefficient data, test result, product history

94n

76 — 98 — 100 — 98 — 100

Vendor server — 90
Product data group — 92

Piezoelectric device A
- Product data A1
- Product data A2
- Product data An

Piezoelectric device B
- Product data B1
- Product data B2
- Product data Bn

76 — 74

70a
72

Computer function
- Temperature characteristic acquisition
- Temperature co-efficient computation

Product data
- Temperature co-efficient data
- Shipment test data
- Product history data

- Piezoelectric device assembling
- Temperature characteristic acquisition
- Temperature coefficient computation/recording
- Electric characteristic test
- Taping/barcode recording
- Product shipping to client or vendor

70b
70n

13

FIG. 8A

FIG. 8B

FIG. 8C

FIG. 9

FIG. 10

FIG. 11